# EUROPEAN PATENT APPLICATION

(11) **EP 0 999 459 A2**
(43) Date of publication of application: **10.05.2000**
(21) Application number: 99119652.8
(22) Date of filing: 04.10.1999
(51) Int. Cl.: G02B 5/30

(54) **UV-visible light polarizer and methods**

(30) Priority: 03.11.1998 US 106866
(71) Applicant: CORNING INCORPORATED, Corning, N.Y. 14831 (US)
(72) Inventor: Beall, George Halsey, c/oCorning Incorporated, Corning, NY 14831 (US); Dawson-Elli, David Francis , c/oCorning Inc., Corning, NY 14831 (US); Visovsky, Nick John, c/oCorning Incorporated, Corning, NY 14831 (US); Borrelli, Nicholas Francis, c/oCorning Inc., Corning, NY 14831 (US); Moore, Chad Byron, c/o Corning Incorporated, Corning, NY 14831 (US)
(74) Representative: Marchant, James Ian

(57) **Abstract**

The present invention describes discrete-particle polarizers for visible and ultra-violet light. The visible light polarizer includes a transparent, glass substrate having a plurality of elongated, metal particles on its surface that have longitudinal axes substantially aligned with one another and aligned with the substrate surface. The metal has a refractive index that is linear with λ² at wavelengths, λ, down to 180 nm, in particular, aluminum. Methods for making visible-light type polarizers are also presented. The light polarizers of the present invention are resistant to degradation at high temperatures and are particularly useful to polarize intense radiation, such as the radiation found in projection television systems.

## Description

### BACKGROUND OF THE INVENTION

Sheet polarizers were developed to replace beam-splitter polarizers which are expensive, bulky, and of limited size. Most sheet, polarizing material marketed commercially has been produced from organic, plastic material. Use of such material is undesirable in certain applications, such as those where high surface hardness, high scratch resistance, stability under UV exposure, or high temperature stability is required. Non-plastic, sheet polarizers that have the desired high surface hardness, high stability, and good scratch resistance characteristics generally fall into one of two categories: (1 ) those containing discrete particles and (2) those containing a wire grid. The present invention is concerned with the former, also known as dichroic polarizers.

The polarizing action of polarizing materials containing discrete, elongated particles is based on the preferential transmission of one polarization vector and the absorption of the orthogonal vector. In commercial, dichroic polarizers of plastic sheet, the particles are either oriented crystals or aligned chains of polymer molecules. Dichroic polarizers that use elongated, metal particles typically use silver or copper particles. In order to effect polarization, the discrete, metal particles must be sufficiently spatially separated so that their electronic interaction is minimal.

Because of the nature of the elongated, metal particle approach to making polarizers, a lower wavelength, performance limit is set for a useful polarizer. This limitation is based on the wavelength dependence of the real part of the dielectric constant for metals such as silver or copper. The resonance-like absorption of metal particles in glass, which is particle shape dependent, is the basis for the dichroic property. This is based on free-electron-like behavior, that is, the real part of the dielectric constant has a λ² dependence.

For metals like silver and copper, that are typically used for dichroic polarizers, the free-electron-like behavior extends only to about 500 nanometers (nm). Below 500 nm, the contribution of intraband transitions dominates the dielectric constant. This all but eliminates the resonance-like absorption which gives rise to the dichroic behavior. Even above 500 nm, where higher, resonance-like absorption is possible, there is a problem of maintaining constant, high transmittance and contrast over any sizeable, wavelength range.

The other type of polarizer, commonly referred to as a Hertzian polarizer, contains a wire grid, typically on the surface of a transparent substrate. Generally, these wire grid polarizers use an array of parallel, reflective wires. The wires are long compared to the wavelength of the radiation to be polarized, and are separated by a distance much less than the wavelength to be polarized. The Hertzian polarizer transmits the radiation with electrical vector perpendicular to the wires and reflects radiation with electrical vector parallel to the wires.

Wire-grid polarizers are useful in the near-infrared spectral region, but have not been effectively extended to the visible portion of the spectrum. It is difficult to produce a uniform density of metal filaments spaced at separations much less than the wavelength of visible light. Furthermore, preparation of uniformly-spaced, metal filaments, separated by distances significantly less than the wavelength of the light to be polarized, is expensive even where it is possible.

The present invention is directed to overcoming these deficiencies in the art by providing a dichroic polarizer that is particularly effective in polarizing light in the ultraviolet and visible portions of the spectrum.

### SUMMARY OF THE INVENTION

The present invention relates, in part, to a polarizer for UV and visible light, the polarizer comprising elongated, substantially parallel, discrete, metal particles, the metal particles being disposed in conjunction with a transparent, glass substrate that is essentially non-reactive with the metal, the metal particles being in a spaced relationship such that they are capable of efficiently polarizing light between 180 nm and 700 nm in wavelength.

The invention also relates to a method of making a polarizer for UV and visible wavelength light which comprises providing a transparent, glass substrate, producing, in conjunction with the substrate surface, elongated, discrete, metal particles that have a substantially parallel relationship to one another and to the substrate surface, and that are so spaced as to efficiently polarize light passing through the substrate and having a wavelength between 180 nm and 700 nm.

The light polarizers of the present invention are resistant to degradation at high temperatures. They are particularly useful to polarize intense, visible radiation, such as the radiation found in projection television systems. When compared to discrete-particle polarizers containing elongated, silver or copper particles, the light polarizers of the present invention have superior transmission and contrast performance in the blue end of the visible spectrum (350 nm to 500 nm). By adjusting the aspect ratio of the elongated, metal particles of the visible-light, discrete-particle type polarizers, the contrast can be maximized over a wide wavelength region that comprises the UV and visible spectra.

### BRIEF DESCRIPTION OF THE DRAWINGS

FIGURES 1-7 are process diagrams embodying isometric views that illustrate different methods of producing discrete particle, dichroic polarizers in accordance with the invention.

FIGURE 1 is a process diagram for a method where an aluminum film is applied to a glass substrate and coated with a polymer resist

FIGURE 2 is a process diagram for a method of forming a polarizer by oblique angle deposition of aluminum on a glass substrate.

FIGURE 3 is a process diagram for a method of forming a polarizer by oblique angle deposition of aluminum onto the sides of polymer islands on a glass substrate.

FIGURE 4 is a process diagram for a method embodying features of FIGURES 1 and 3.

FIGURE 5 is a process diagram for a method of forming a polarizer by unidirectionally abrading a glass substrate, depositing an aluminum film, and heat treating and stretching the substrate.

FIGURE 6 is a process diagram for a method of forming a polarizer by applying an aluminum, colloid/MOD solution on a glass substrate.

FIGURE 7 is a process diagram for a method of forming a polarizer by depositing alternate layers of aluminum and glass on a substrate.

### DETAILED DESCRIPTION OF THE INVENTION

The invention is directed broadly to dichroic polarizers that are effective in the UV-visible waveband. The polarizers are based on discrete, elongated particles of a metal that exhibit free-electron-like behavior down to a wavelength of at least 180 nm. This behavior is evident from the dielectric constant or refractive index of the metal that is linear with respect to λ² down to that wavelength.

Any metal exhibiting this property might be used, but aluminum is deemed to be a practical metal for the purpose. Accordingly, the invention is described with respect to that metal.

The resonance-like absorption of aluminum particles is shape dependent. This dictates that the particles have a proper aspect ratio (length to width ratio). The length of aluminum particles (measured along their longest dimension) is preferably less than the wavelength of the light to be polarized to avoid scattering of light at that wavelength. It is also preferred that each of the plurality of metal particles has substantially the same length. Also, each of the plurality of metal particles will have a length of from about 0.1 µm to about 1 µm depending on the wavelength of light to be polarized.

Aspect ratios, which maximize the ratio of the parallel and perpendicular components of the polarized light produced by the present, light polarizers, are dependent on the wavelength of the incident light. They can be selected using a simple, Rayleigh approximation. For example, maximum contrast for 520, 360, and 280 nm light is achieved when the metal particles have aspect ratios of about 5:1, about 3:1, and about 2:1, respectively. Various sizes and shapes of metal particles can be employed. Suitable shapes are prolate spheroids, which includes prolate ellipsoids. Preferably, each of the metal particles has an effective volume equal to the volume of a sphere having a diameter of from about 0.1 µm to about 0.5 µm.

The degree of polarization contrast attainable depends on the number of particles per unit area of substrate surface. It also depends on the sum of the cross-sectional areas occupied by each individual particle. The areas are taken in a plane passing through the particle's longitudinal axis and parallel to the surface of the substrate. The particles may have an interparticle spacing greater than the wavelength of the light to be polarized. However, with very large, interparticle spacing, contrast decreases. Consequently, a large spacing requires a large, device thickness in the light direction to retain high contrast.

Optimally, the average, interparticle spacing of adjacent particles is from about three to about six times the wavelength of the light to be polarized, preferably about four. Typically, this can be achieved when the metal particles collectively cover from about ten to about fifty percent of the substrate surface, or the equivalent area when dispersed in a transparent coating such as glass.

The invention also relates, in part, to the use of non-silicate, borate glasses in contact with aluminum in producing the polarizer of the invention. The borate glass may be employed as a substrate for aluminum particles in contact with the glass surface. Alternatively, the aluminum particles may be dispersed within the glass. In any case, the glass must be transparent to the light being polarized.

Glasses containing any appreciable amount of silica, or other constituent reactive with aluminum, can not be used. Certain methods for making a polarizer with elongated, aluminum particles require heating and stretching a glass body to elongate and align the aluminum particles. This can not be done with silicate-based glasses because of the severe reaction of the aluminum with the glass at elevated temperatures. The aluminum is severely oxidized due to redox reaction with the silicates, or reacts with other oxides in the glass to form undesired, aluminum-based phases.

Suitable glasses are members of the alkaline earth aluminoborate family which may contain lithia in lieu of alkaline earth. Broadly, such glasses consist essentially of, as calculated in weight per cent on the oxide basis, 10-85% B₂O₃, 5-45% Al₂O₃ and 5-80% RO+Li₂O wherein RO includes one or more of MgO, CaO, SrO and BaO. Preferred compositions consist essentially of 25-40% B₂O₃, 20-40% Al₂O₃, and 10-45% RO where RO is constituted by 0-35% CaO, 0-45% BaO, 0-10% MgO and 0-30% SrO.

A preferred composition is a calcium aluminoborate glass that contains 32% CaO, 38% Al₂O₃, and 30% B₂O₃.

Several other suitable compositions are set forth in weight % in TABLE I below:

**TABLE I**

| | **1** | **2** | **3** | **4** | **5** | **6** | **7** | **8** |
|---|---|---|---|---|---|---|---|---|
| **B**_{**2**}**O**_{**3**} | 40.0 | 17.3 | 61.0 | 51.9 | 80.0 | 35.0 | 53.8 | 58.4 |
| **Al**_{**2**}**O**_{**3**} | 32.6 | 12.7 | 28.0 | 23.9 | 8.0 | 35.1 | 24.7 | 26.9 |
| **CaO** | 27.4 | - | - | - | - | 29.9 | - | 14.7 |
| **BaO** | - | 70.0 | - | - | - | - | 16.0 | - |
| **MgO** | - | - | 11.0 | - | - | - | 5.5 | - |
| **SrO** | - | - | - | 24.2 | - | - | - | - |
| **Li**_{**2**}**O** | - | - | - | - | 12.0 | - | - | - |

These glasses may be formed in either of two ways. One method involves conventional, batch melting, at high temperature (~1450° C.), of a mixture of suitable compounds to form a molten glass. The glass is then formed into a sheet using sheet draw or float methods. Once formed, the sheet is cut and polished into appropriately sized substrates.

A second method for making such a glass uses metal oxide deposition (MOD) which is also known as chemical solution deposition (CSD). In this method, a thin film of, for example, a calcium aluminoborate glass is formed by first depositing, by dip coating or spin coating on a substrate, a methanol-water solution of calcium acetate, aluminum lactate, and boric acid. The coated substrate is then heat treated at 550-600° C. for about one hour to transform the film into a glassy state.

The invention also relates, in part, to methods for making polarizers having elongated, aligned, aluminum particles of proper size. The particles may be either deposited on a substrate or dispersed within a glass body.

One method for making a polarizer involves deposition of an aluminum film of about 0.03 to 3 µm thickness on a glass substrate, preferably a calcium aluminoborate glass. A polymer, resist film is then coated on top of the aluminum film. The polymer film is patterned using E-beam lithography to create polymer islands that are about 0.1 by 0.2 µm in size. The longitudinal axes (0.2 µm dimension) of the islands are aligned in parallel. Following this, a chlorine plasma is used to etch away the aluminum, film areas that are not covered by the polymer islands. This leaves behind aluminum islands that are protected from etching by the polymer. The polymer is removed using a solvent.

Optionally, to increase the contrast of the polarizer, the above process can be repeated several times. First, about a 3µm thick film of glass, preferably the calcium aluminoborate glass, is coated atop the aluminum-island-patterned substrate. The steps above are then repeated to create another pattern of aluminum islands on the glass film. The multi-layered, aluminum island/substrate body is heated and stretched in the longitudinal direction of the particles. This reduces the 0.1 µm dimension of the particles to about 0.05 µm or less and increases the 0.2 µm dimension to 0.3 µm or more.

A variation of this method is to deposit an aluminum film on a glass substrate. A pattern of rectangular, polymer islands is then formed on the aluminum film. Chromium metal is then obliquely deposited unidirectionally on the long sides of the polymer islands forming "masking" particles of the appropriate size. The polymer islands are removed with a solvent. Subsequently, excess chromium metal, and unprotected portions of the aluminum film, are removed by anisotropic etching. Finally, the remaining chromium is removed to leave aluminum particles of the appropriate size.

Another method for making a polarizer involves the deposition of a metal onto a glass substrate by sputtering, E-beam, or thermal evaporation at an oblique angle. The nature of oblique angle deposition of metals inherently produces islands that have suitable aspect ratios and size. The use of aluminum metal enables making a polarizer in this fashion. Optionally, to increase the contrast of the polarizer, the above process can be repeated several times. First, however, about a 3 µm thick film of glass is coated atop the aluminum-island-patterned substrate. The aluminum deposition is then repeated to create another pattern of aluminum islands on the glass film.

Yet another method for making a polarizer is to create a pattern of 0.5 µm x 0.1-0.2 µm rectangular, photoresist islands. The islands are about 0.03 to 3 µm thick and are separated from each other by a distance of 1.5 µm. This can be done by conventional, photolithography methods. Following this, aluminum is then obliquely deposited on one side of the islands to form aluminum particles of about 0.05 µm thickness. The photoresist is then removed with a solvent.

Optionally, to increase the contrast of the polarizer, the above process can be repeated several times. First, about a 3 µm thick film of glass is coated atop the aluminum-island-patterned substrate. The above process is then repeated to create another pattern of aluminum islands on the glass film.

The polarizer may also be made by unidirectionally abrading a glass substrate, preferably the substrate being a calcium aluminoborate glass. The abrading material can be 0.05 µm, diamond impregnated, Mylar film. An aluminum film of about 0.03 µm thickness is then deposited on the abraded substrate.

Optionally, to increase the contrast of the polarizer, the above process can be repeated several times, if a 3 µm thick film of glass is coated atop the aluminum film each time. The above process is repeated to create multiple layers of alternating, abraded glass and aluminum film. Finally, the substrate is heated and stretched, whereby the aluminum film will break up into particles. The particles tend to align with the unidirectional, closely spaced scratches on the glass surface. Because of the adhesion of the aluminum to the glass, the aluminum particles will also tend to elongate.

Yet another method for making a polarizer is to use the metal-oxide-deposition (MOD) technique. Aluminum particles are added to the chemical solution to form an aluminum colloid/MOD solution. The aluminum particles are obtained by spray atomization of molten aluminum.

The MOD solution may be the precursor for the calcium aluminoborate glass, and may be prepared as described earlier. The aluminum colloid/MOD solution is coated onto a calcium aluminoborate, glass substrate by either spin coating, or dip coating, and drying. Multiple coats may be applied to give a final coating thickness of about 30 µm. The coated substrate is then heated to form a glass/aluminum particle matrix. While at elevated temperature, it is stretched to obtain the proper aspect ratios for particles, and to also align the particles with their long dimensions parallel to each other.

The invention will be further described with reference to the accompanying drawings. The drawings employ isometric views to illustrate process steps in various methods of producing polarizers in accordance with the invention. It will be appreciated that dimensions, particularly those of islands produced in forming polarizing particles, are exaggerated in size to facilitate illustration.

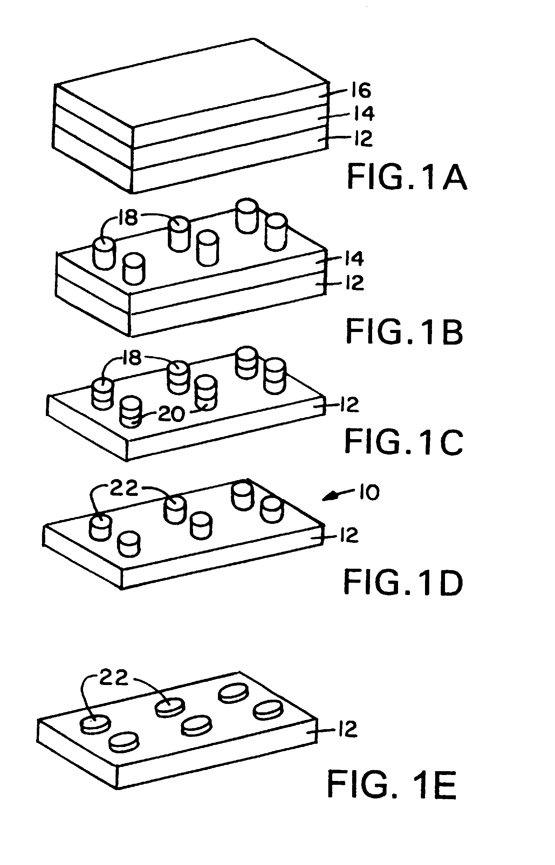

FIGURE 1 illustrates steps in a process where an aluminum film on a glass substrate is coated with a polymer resist. The polymer resist is patterned and treated to produce aluminum islands on the substrate. The substrate is then heated and stretched to elongate the substrate and the islands to form a polarizer.

In FIGURE 1a, a transparent, glass substrate 12 is preferably a calcium aluminoborate glass. A film of aluminum 14, about 0.3 to 3 µm thick, is applied to the top surface of glass substrate 12. A coating of polymer resist 16 is applied to the exposed surface of aluminum coating 14. The photoresist 16 is patterned using conventional, E-beam lithography to produce a pattern. The polymer resist is a negative type which, when exposed to the E-beam, crosslinks and is made resistant to dissolution by solvents. The resist is exposed to form a plurality of 0.1 by 0.2 µm islands 18, where the polymer resist is crosslinked. Unexposed, polymer resist is removed using a solvent. This leaves behind only the crosslinked polymer islands 18, atop the aluminum film 14 as shown in FIGURE 1b.

The polymer-resist-patterned substrate is then subjected to a chlorine plasma etch. As shown in FIGURE 1c, this removes all aluminum film 14, except those portions 20 which are protected by the polymer, resist islands 18. The polymer, resist islands 18 are then removed using a different solvent, leaving behind the aluminum islands 20 as shown in FIGURE 1d.

The substrate 12 is heated and stretched in the direction of the long, 0.2 µm dimension of the aluminum islands 20. This elongates the islands 20 to produce islands 22 having dimensions of about 0.05 µm or less for the smaller dimension by 0.3 µm or more for the longer dimension. This produces polarizer 10 as shown in FIGURE 1e.

Optionally, following the step in FIGURE 1d, a film of calcium aluminoborate glass, of greater than 3 µm thickness, is coated atop the aluminum islands 20 using metal oxide deposition (MOD). This assembly is then heat treated to transform the deposited oxides into a glass state. The assembly is then processed again through the steps shown in FIGURES 1a through 1d to produce a second layer of aluminum islands. The first layer of islands 20 is embedded in the MOD glass film. This process can be repeated to provide a plurality of aluminum islands embedded in the stacked MOD glass films, thereby giving a higher, polarizer contrast. The stacked assembly is heated and stretched in the direction of the long, 0.2 dimension of the aluminum islands. This elongates the islands to get a final, island dimension of about 0.05 µm or less for the smaller dimension by 0.3 µm or more for the longer dimension.

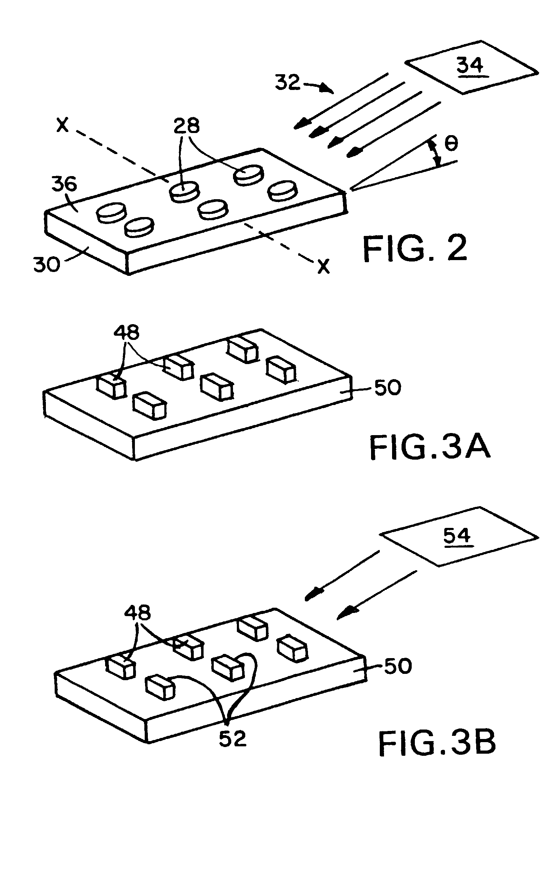

FIGURE 2 illustrates a method whereby a glass substrate can have elongated, metal islands directly deposited on a glass surface by a technique of oblique angle deposition. In accordance with this method, directed streams of aluminum are generated by known means. The streams are so directed that they impinge the glass substrate at an oblique angle.

As shown in FIGURE 2, aluminum islands 28 are aligned on glass substrate 30 with respect to the direction (arrows, 32) of travel from the aluminum source 34. Aluminum islands 28 deposit and grow on glass substrate 30 in an elongated fashion. The longer dimension of the islands is aligned with the direction of metal traveling from the source 34 to the substrate 30.

The angle θ is the angle of the direction of metal travel 32, with respect to the surface plane 36 of the substrate 30. This angle can be varied by tilting the glass substrate around its X - X axis. A smaller angle of deposition (e.g., 5 degrees) will tend to produce metal islands with high aspect ratio. Depositing at a greater angle (e.g., 45 degrees) tends to produce islands with low aspect ratio.

Optionally, to increase the contrast of the polarizer, a glass film of about 3 µm thickness is deposited on the aluminum islands 28 on the glass substrate 30. Aluminum islands of the same nature as islands 28 are again deposited on the surface of the glass film. As explained earlier, a plurality of alternating layers of glass films and aluminum islands can be added to increase the contrast of the polarizer.

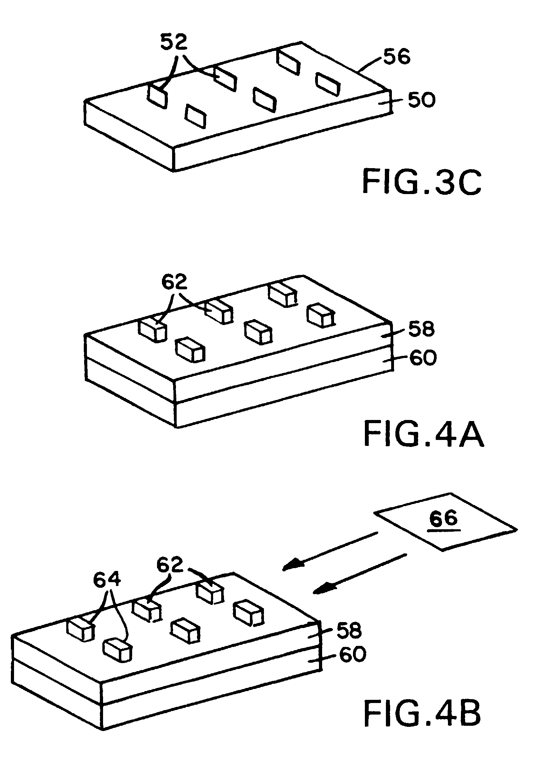

FIGURE 3 illustrates the process steps whereby a discrete, aluminum-particle polarizer can be made using conventional, UV photolithography methods with subsequent, oblique angle deposition of aluminum.

FIGURE 3a shows a plurality of photoresist, polymer islands 48 produced on a glass substrate 50. Islands 48 have a thickness of about 0.03 to about 3 µm, have lengths of about 0.5 µm, and are separated from each other by about 1.5 µm distance. The islands are preferably rectangular in shape, and are formed with their long dimension across the direction of travel of the aluminum.

FIGURE 3b shows aluminum metal deposited to a thickness of about 0.5µm at an oblique angle from an aluminum source 54. The aluminum is deposited on one side of the polymer resist islands 48. This forms aluminum particles 52 that are about 0.5 µm long and about 0.05 µm wide. The photoresist islands 48 are then removed with a solvent. The overdeposit of aluminum is removed by anisotropic etching normal to the substrate surface. This leaves a polarizer 56 as shown in FIGURE 3c.

Optionally, to increase the contrast of the polarizer, a glass film of about 3 µm thickness may be deposited over the aluminum particles 52 on the glass substrate 50. Photoresist polymer islands 48 may be again formed by conventional, photolithography methods on the surface of the glass film. As before, aluminum is then deposited to form particles on the sides of the polymer, resist islands. As noted in earlier methods, a plurality of alternating layers of glass films and aluminum islands can be added to increase the contrast of the polarizer.

FIGURE 4 shows a variation of the methods depicted in FIGURES 1 and 3. FIGURE 4a shows an aluminum film 58 deposited on glass substrate 60. A plurality of polymer, resist islands 62 are formed on aluminum film 58. These islands have a thickness of 0.3 to 3.0 µm, a length of about 0.5 µm, and are separated from each other by about 1.5 µm. The islands are preferably rectangular in shape, and are formed with their long dimension laterally across the substrate.

FIGURE 4b shows chromium metal 64 deposited at an oblique angle from a chromium source 66 onto one side of polymer, resist islands 62. This forms chromium particles of about 0.5 µm thickness. Polymer, resist islands 62 are then removed with a solvent. The overdeposit of chromium, and all of the aluminum film not covered by chromium, are removed by anisotropic etching normal to the surface of substrate 60. The remaining chromium, overlying aluminum particles 68, is then selectively removed. This leaves only aluminum particles 68 on the surface 60 of substrate as shown in FIGURE 4c.

Optionally, the method may be repeated to add an additional layer of aluminum particles, and thereby increase the contrast of the polarizer. Initially, a glass film of 3µm thickness is deposited over the aluminum particles shown in FIGURE 4c. The process is then repeated by depositing an aluminum film on the glass film and patterning polymer, resist islands on the aluminum film. Chromium particles are then obliquely deposited on the polymer islands as before. The polymer photoresist is removed with solvent, and the overdeposit of chromium, and all aluminum film that is not covered by the chromium particles, are removed by etching. This leaves aluminum particles covered by chromium particles. The chromium particles are selectively removed leaving a second layer of aluminum particles of the same nature as shown in FIGURE 4c. A plurality of alternating layers of glass films and aluminum islands can be added to increase the contrast of the polarizer.

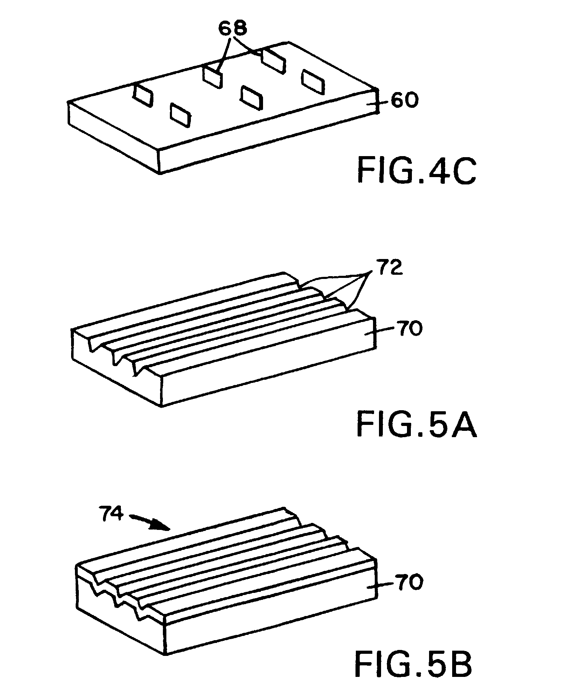

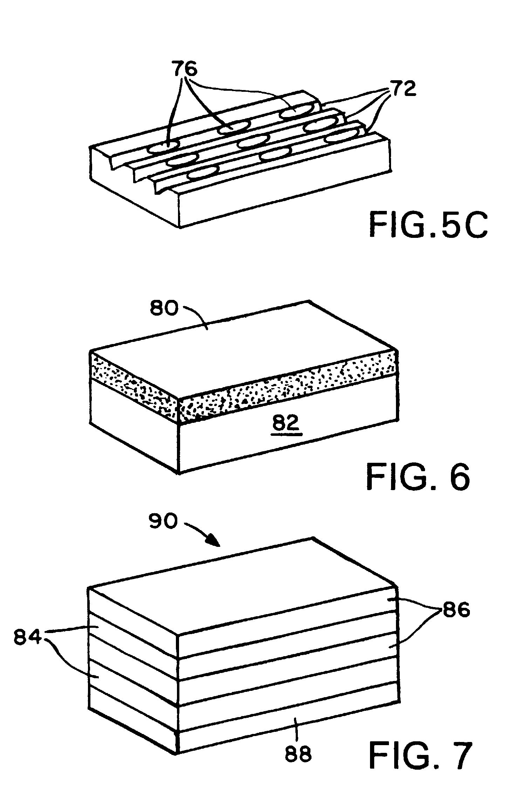

FIGURE 5 illustrates still another method for preparing a discrete, aluminum-particle polarizer. As shown in FIGURE 5a, the surface of a glass substrate 70, preferably a calcium aluminum borate glass, is abraded unidirectionally. A 0.5 µm, diamond-grit-impregnated, Mylar, sheet abrasive may be used to form channels 72.

FIGURE 5b shows a 0.03 µm thick film 74 of aluminum deposited on the abraded surface of substrate 70. Abraded substrate 70 and aluminum film 74 are heated to about 750° C. and then stretched. The aluminum film 74 will break up into particles 76. These tend to align with the unidirectional, closely spaced scratches 72 on abraded glass substrate 70 as shown in FIGURE 5c. Because of the adhesion of the aluminum to the glass, the aluminum particles will tend to elongate as the substrate is stretched.

Optionally, to increase the contrast of the polarizer, a glass film, preferably a calcium aluminoborate glass of about 3 µm thickness, is deposited by metal oxide deposition (MOD) on the aluminum film 74 prior to stretching. This glass film is also unidirectionally abraded as in FIGURE 5a. Then, an aluminum film of about 0.3 µm thickness is deposited on that abraded, glass film as in FIGURE 5b. As in earlier methods, a plurality of alternating layers of abraded, glass films and aluminum films can be added to increase the contrast of the polarizer. The multilayer assembly is then heated and stretched to form elongated, aluminum particles 76 as shown in FIGURE 5c.

FIGURE 6 shows a polarizer made using metal oxide deposition (MOD). Aluminum particles are added to the chemical solution to form an aluminum colloid/MOD solution. The aluminum particles could be obtained by spray atomization of molten aluminum. The MOD solution could be the precursor for the calcium aluminoborate glass, and prepared as described earlier.

FIGURE 6 shows the aluminum colloid/MOD solution 80 coated onto a calcium aluminoborate glass substrate 82 by either spin coating or dip coating. Multiple coats could be applied to give a final, coating thickness of about 30 µm. The coated substrate 82 would then be heat treated to form a glass/aluminum particle matrix. While at elevated temperature, it would be stretched to obtain the proper aspect ratios for the particles, and to also align the particles with their long dimensions parallel to each other.

FIGURE 7 illustrates a method of forming a polarizer by depositing alternate layers of aluminum and glass on a substrate. In this method, a 0.03 µm thick aluminum film 84 is deposited on substrate 86, preferably a calcium aluminoborate glass. A 3 µm thick glass film 88 is applied over aluminum film 84 using a MOD solution and procedure.

Alternate layers of aluminum and MOD solution may be applied until the resulting assembly 90 will produce the desired polarization contrast when processed. Assembly 90 is heated and stretched, whereby the aluminum film(s) breaks up into sub-micron particles. Because the aluminum particles adhere to the glass, they elongate together with the glass to impart the desired aspect ratio. This provides another method of producing a polarizer in which aluminum particles are within a glass body.

It will be apparent from the foregoing description that the invention is basically a polarizer for light in the range of 180-700 nm. The effective polarizer is particles of metal that have free-electron-like behavior. This is evidenced by a refractive index that is linear with respect to λ² at wavelengths down to 180 nm. The metal particles, preferably aluminum, have an appropriate size, as described, and may be formed on or within a glass surface. The glass surface may be on a glass substrate, or on one or more glass layers or films overlying the substrate.

## Claims

1. A polarizer for ultraviolet and visible light, the polarizer comprising elongated, substantially parallel, discrete, metal particles, the metal particles being disposed in conjunction with a transparent, glass substrate that is essentially non-reactive with the metal, the metal having a refractive index that is linear with λ² within the range of 180 to 700 nm and the metal particles being in a spaced relationship such that they are capable of efficiently polarizing light within the range of 180 nm and 700 nm, in wavelength.

2. A polarizer according to claim 1 comprising a plurality of discrete, metal particles that are disposed on the glass substrate, that have longitudinal axes substantially aligned with one another and with the substrate surface, and that have aspect ratios that are proportional to the wavelength of the light being polarized.

3. A polarizer according to claim 1, further comprising:
one or more transparent layers disposed on the substrate surface, each having a surface, and
a plurality of elongated, metal particles disposed in conjunction with the surface of each of said transparent layers, wherein said metal particles have refractive indices linear with respect to λ² within the range of 180-700 nm, and longitudinal axes substantially aligned with one another and with the substrate surface.

4. A polarizer according to claim 1 wherein the metal particles are aluminum.

5. A polarizer according to claim 1 wherein the substrate glass in an aluminoborate containing at least one modifying oxide selected from CaO, BaO, MgO, SrO and Li₂O and being essentially free of silica.

6. A method of making a polarizer for ultra-violet and visible light which comprises providing a transparent, glass substrate, producing, in conjunction with the substrate surface, elongated, discrete, metal particles that have a substantially parallel relationship to one another and to the substrate surface, that have a refractive index that is linear with respect to λ² within the range of 180-700 nm, and that are so spaced as to efficiently polarize light passing therethrough and having a wavelength between 180 nm and 700 nm.

7. A method according to claim 6 which comprises producing elongated, discrete, aluminum particles in conjunction with the substrate surface.

8. A method according to claim 7 which comprises producing the aluminum particles on the glass substrate surface, coating a glass film over the aluminum particles, and repeating the step of producing aluminum particles to thereby produce aluminum particles on the glass film, thereby increasing the polarizer contrast.

9. A method according to claim 6 which comprises depositing a continuous, aluminum film on the substrate surface and removing a portion of the aluminum film under conditions effective to leave spaced, aluminum particles on the substrate surface.

10. A method according to claim 6 comprising abrading the glass, substrate surface under conditions effective to produce a plurality of scratches having longitudinal axes substantially aligned with one another, depositing metal over the substrate surface, and heating the substrate surface under conditions effective to coalesce the deposited metal into discrete, elongated islands of metal aligned with the scratches.

11. A method according to claim 6 which comprises producing the elongated, discrete, metal particles by alternately depositing a layer of aluminum on glass and a layer of glass on aluminum, thereby forming a layered assembly, heating the assembly to form aluminum particles from the aluminum film, and stretching the assembly, while heated, to elongate the particles, thereby increasing the polarization contrast.
